# EUROPÄISCHE PATENTSCHRIFT

(11) **EP 0 290 376 B1**
(45) Veröffentlichungstag und Bekanntmachung des Hinweises auf die Patenterteilung: **26.05.1993**
(21) Anmeldenummer: 88730100.0
(22) Anmeldetag: 28.04.1988
(51) Int. Cl.: B65G 49/04, B65G 47/90

(54) **Anordnung zum Absenken, bzw. Hochheben von Warenträgern zwecks Beschickung von Bädern von chemischen Anlagen**
Arrangement for lowering or lifting pallets in order to feed baths of chemical installations
Dispositif pour abaisser ou soulever des palettes permettant le chargement des bains d'installations chimiques

(30) Priorität: 02.05.1987 DE 3714728
(43) Veröffentlichungstag der Anmeldung: 09.11.1988
(73) Patentinhaber: SCHERING AKTIENGESELLSCHAFT, 13342 Berlin (DE)
(72) Erfinder: Knorr, Heinrich, D-8501 Feucht (DE)

(56) Entgegenhaltungen:
- FR-A- 2 535 985
- US-A- 3 601 134

## Beschreibung

Die Erfindung betrifft eine Anordnung gemäß dem Oberbegriff des Anspruches 1. Eine derartige Anordnung ist aus der US-A-3 601 134 bekannt. Dort ist am Transportwagen eine im Querschnitt U-förmige relativ kurze Führungsschiene befestigt, die für die Tragteile des Warenträgers eine Führung bildet. Die vorstehend beschriebene Anordnung ist in mehrfacher Hinsicht nachteilig. Wie erwähnt ist die Führung relativ kurz, so daß die hiermit angestrebte Kippsicherung nur über einen relativ kurzen Teil der gesamten Auf- und Abwärtsbewegung des Warenträgers wirksam wird. Es sind aber durchaus in der Praxis Fälle denkbar, in denen ein ungewolltes Abheben der Hubteile von den Tragteilen auch nach Absenken des Warenträgers um einen Weg solcher Länge erfolgt, daß seine Tragteile sich außerhalb dieser kurzen Führung befinden. Dann aber bestehet nach wie vor die Gefahr des Abkippens des Warenträgers zur Seite und damit eine Beschädigung des Warenträgers, der Ware selber und von weiteren Bestandteilen der Anlage.

Die Aufgabe der Erfindung besteht, ausgehend von seiner Anordnung gemäß dem Oberbegriff des Anspruches 1 darin, eine andere Konzeption der Führung zu entwickeln, welche die Forderung nach Robustheit und Einfachheit der Anordnung einerseits und zugleich andererseits die Forderung nach einer einwandfreien Funktion der Anordnung in allen Fällen eines Abhebens der Hubteile von den Tragteilen gewährleistet.

Die Lösung dieser Aufgabe wird, ausgehend vom Oberbegriff des Anspruches 1, in den Merkmalen des kennzeichens des Anspruches 1 gesehen. Gleichgültig an welcher Stelle der Bewegung des Warenträgers durch irgendein Versehen ein in dessen Absenkweg des Warenträgers mit Traggestellen und Ware ragendes Teil oder eine sonstige Unregelmäßigkeit das Absenken des Warenträgers blockiert, der Hubteil aber weiter absinkt: In jedem dieser Fälle ist wegen der Erstreckung der Führung über zumindest die wesentliche Länge des Hub- bzw. Absenkweges dafür gesorgt, daß ein die Anlage gefährdendes Abkippen des Warenträgers mit Ware nicht eintreten kann. Da die Führung fix am Transportwagen befestigt ist, wird im Falle eines Abkippens des Warenträgers zur Seite sein Gewicht und das Gewicht der von ihm getragenen Waren von einem sehr robusten Bauteil, nämlich dem Transportwagen, bzw. von Holmen oder Streben des Transportwagens aufgefangen. Die demgegenüber wesentlich leichter und empfindlicher gebaute Hubeinrichtung wird mit dem Kippgewicht nicht belastet. Durch die Dämpfe der Badflüssigkeit angreifbare mechanische Teile, Gelenkverbindungen oder dergleichen, sowie elektrische Leitungen oder Schalter sind im Badbereich nicht vorhanden.

Ein Schalter, der im Falle eines Abhebens der Hubeinrichtung vom Warenträger die Transportmittel abschaltet, befindet sich außerhalb des Bereiches der Dämpfe der Bäder und ist im gezeigten Ausführungsbeispiel ebenfalls fix am Transportwagen angebracht.

Die Merkmale des Anspruches 2 beinhalten eine konstruktiv einfache und in der Führung seht sichere Ausgestaltung der Erfindung.

Die Merkmale des Anspruches 3 haben nicht nur den Vorteil der Verschleißfestigkeit solcher Kunststoffe, sondern vor allem auch den weiteren Vorteil, daß Kunststoffe durch die erwähnten chemischen Dämpfe der Bäder nicht angegriffen werden, also auch in dieser Hinsicht widerstandsfähiger sind als Schienen aus Metall.

Eine bevorzugte Ausführungsform der Erfindung ist Gegenstand des Anspruches 4. Im Gegensatz zu der vorbekannten und erläuterten Anordnung nach DE-PS 26 39 542 können sich die mit dem Transportwagen in Längsrichtung der Anlage verfahrbaren, unter anderem die Hubeinrichtung haltenden Bauteile des Transportwagens außerhalb der Führungsleisten und des Warenträgers befinden. Dies erlaubt eine entsprechend breite, stabile Konstruktion des Transportwagens, einschließlich seiner verfahrbaren Abstützung auf seitlich neben den Bädern gelegenen Laufschienen. Demgegenüber befindet sich bei der vorbekannten Anordnung nach DE-PS 26 39 542 der die Hubeinrichtung tragende , verfahrbare Führungsrahmen im Innenbereich der Anordnung, d.h. oberhalb der Bäder. Die Merkmale des Anspruches 4 ergeben außerdem den weiteren Vorteil, daß die Führungsleisten zugleich der seitlichen Führung der Haltearme der Hubeinrichtung dienen. Mit den Merkmalen des Anspruches 5 ist dafür gesorgt, daß bei vollständig abgesenktem Warenträger dieser einem Verfahren des Transportwagens mit der Hubeinrichtung an eine andere Stelle der Anlage nicht im Wege ist.

Weitere Vorteile und Merkmale der Erfindung sind der nachfolgenden Beschreibung und der zugehörigen Zeichnung eines erfindungsgemäßen Ausführungsbeispieles zu entnehmen. In der Zeichnung zeigt:

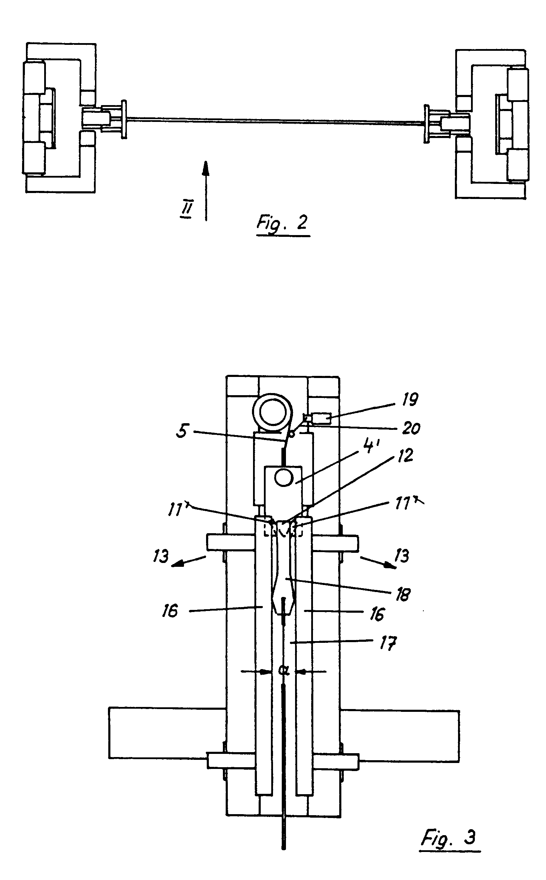

- Fig. 1:: eine Ansicht auf eine Anordnung nach der Erfindung gemäß dem Pfeil I in Fig. 2,
- Fig. 2:: einen Schnitt gemäß der Linie II-II in Fig. 1,
- Fig. 3:: einen Schnitt gemäß der Linie III-III in Fig. 1.

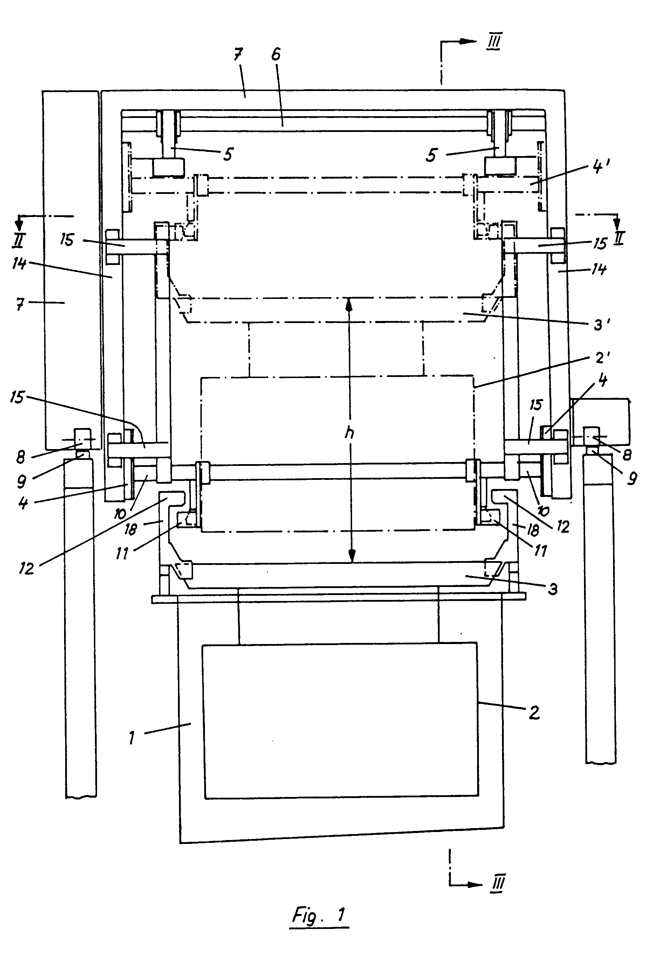

Fig. 1 zeigt den Aufbau der Anordnung mit den hier wesentlichen Bauteilen, bzw. Elementen. In das Bad 1 einer chemischen Anlage, insbesondere Galvanisieranlage, sollen die Waren 2, z.B. zu galvanisierende Leiterplatten, mit Hilfe eines Warenträgers 3 ein- und ausgebracht werden. Sie hängen zu diesem Zweck über in der Zeichnung nicht gesondert dargestellte Traggestelle am Warenträger, der bezogen auf Fig. 1 in senkrechter Richtung auf- und abbewegbar ist. Dabei sind die Waren 2 und der Warenträger 3 mit ausgezogenen Linien in völlig abgesenkten Position, bzw. in der Bezifferung 2′, 3′ mit strichpunktierter Darstellung in der höchsten Position dargestellt. Damit ergibt sich als maximaler Hubweg der Betrag h.

Die vorgenannte Hub- bzw. Absenkbewegung erfolgt mittels einer Hubeinrichtung 4 (abgesenkte Lage mit durchgezogenen Linien dargestellt) bzw. 4′ (obere Lage mit strichpunktierten Linien dargestellt). Hierzu sind Tragbänder 5 vorgesehen, die mittels einer angetriebenen Welle 6 eines Transportwagens 7 die Hubeinrichtung und den daran hängenden Warenträger absenken, bzw. anheben. Dabei zeigt aus Gründen der zeichnerischen Vereinfachung Fig. 1 die Tragbänder 5 nur in ihrer oberen Lage, in der sie die Hubeinrichtung und die Warenträger in ihrer oberen, strichpunktiert gezeichneten Stellung halten. Der Transportwagen 7 ist mittels Führungsrollen 8 auf Laufschienen 9 der Anlage in einer Richtung verfahrbar, die senkrecht zur Zeichenebene der Fig. 1 verläuft. Hiermit können die Warenträger zu den jeweiligen Bädern, bzw. zu Belade- oder Entladestationen (nicht dargestellt) gebracht werden.

Für das Anheben der im Bad befindlichen Waren eines Warenträgers 3 wird der Transportwagen 7 soweit entlang der Anlage verfahren, bis die am Hubbalken 10 der Hubeinrichtung 4 befindlichen, von innen nach außen ragenden Hubteile 11 unterhalb von beiderseits angeordneten Tragarmen 12 des Warenträgers 3 sich befinden. Wird dann mit Hilfe der Bänder 5 die Hubeinrichtung beiderseits angehoben, so greifen die Hubteile 11 an den Tragarmen 12 an (siehe Fig. 3) und heben den Warenträger bis in seine oberste Position 3′. Die Hubteile können aus zwei, miteinander einen spitzen Winkel bildenden, Schienenstücken und die Tragarme jeweils aus einem im Querschnitt diesem Winkel angepaßten, d.h. nach unten spitz zulaufenden Vorsprung 12 bestehen (siehe Fig. 3).

Soll nun aus der obersten, strichpunktierten Lage die Hubeinrichtung 4′ mit Warenträger 3′ abgesenkt werden und wird bei diesem Absenken der Warenträger 3′, bzw. die an ihm angebrachten Traggestelle mit der daran hängenden Ware durch Verkanten ein vorstehendes Teil oder durch einen sonstigen Fehler am Absenkvorgang blockiert, so hat dies zur Folge, daß der Warenträger mit seinen Tragarmen 12 in der blockierten Lage stehenbleibt, während sich die Hubeinrichtung mit den Hubteilen 11 weiter absenkt. Damit wird die bisher durch die Hubeinrichtung gegebene Kippsicherung des Warenträgers gegen ein Abkippen in einer der Pfeilrichtungen 13 (siehe Fig. 3) aufgehoben. Ein solches Abkippen des Warenträgers mit der an ihm hängenden Last, einschließlich der Traggestelle, kann zu erheblichen Schädigungen der Anlage, insbesondere auch der Bäder führen. Um dies zu vermeiden, sind am Transportwagen 7 an beiden Seiten je zwei Führungsleisten 16 angebracht, die zwischen sich jeweils einen senkrechten Führungsspalt 17 von einer Breite a für ein in seiner Breite diesem Spalt entsprechenden Führungsteil 18 des Tragarmes 12 des Warenträgers 3 bilden. Die bevorzugt aus gegen chemische Aggression widerstandsfähigen Kunststoff bestehenden Führungsleisten 16 sind somit fix am Transportwagen 7 angebracht. Im vorliegenden Ausführungsbeispiel sind die Führungsleisten 16 über Verbindungsstreben 15 an senkrechten Streben oder Holmen 14 des Transportwagens befestigt. Die Länge der Führungsleisten ist so gewählt, daß sie sich zumindest soweit über die wesentliche Länge des Hubweges h erstrecken, daß der Warenträger in all den Positionen, in denen sein Abkippen zur Seite Gefährdungen der Anlage, bzw. der Bäder oder der an ihm hängenden Waren zur Folge haben könnte, gegen dieses Abkippen durch die Führungsleistenpaare 16 gesichert ist. Die Führungsleisten 16 müssen lediglich soweit oberhalb des Warenträgers 3 in seiner untersten, abgesenkten Position enden, daß der Transportwagen mit entsprechend abgesenkter Hubeinrichtung 4 (siehe Darstellung mit durchgezogenen Linien in Fig. 1) an eine andere Stelle der Anlage verfahren werden kann.

Die aus Kunststoff bestehenden Tragbänder 5 (oder entsprechende Seile, Ketten oder dergleichen) arbeiten mit einem Bandspannungsschalter 19 zusammen, der mit einem Tastarm 20 an einem der Bänder 5 anliegt. Sofern der erläuterte Fehler einer Blockierung der Absenkbewegung des Warenträgers eintritt und im Verlauf der weiteren Absenkung dann auch die Hubeinrichtung auf den Warenträger zur Auflage kommt, so wird dann die Spannung des oder der Bänder 5 aufgehoben und über den Schalter 19, 20 die weitere Absenkbewegung der Bänder 5 gestoppt.

## Patentansprüche

1. Anordnung zum Absenken bzw. Hochheben von Warenträgern zwecks Beschicken von Bädern von chemischen Anlagen, insbesondere von galvanischen Anlagen, wobei ein entlang der Anlage verfahrbarer Transportwagen und eine vom Transportwagen in senkrechter Richtung auf- und abbewegbare Hubeinrichtung vorgesehen ist, die durch Verfahren des Transportwagens mit Hubteilen unter Tragarmen des jeweiligen Warenträgers bringbar ist, wobei eine Führungsvorrichtung für den Warenträger im Falle des Abhebens seiner Tragarme von den Hubteilen vorgesehen ist, wobei die Führungsvorrichtung (16) für den Warenträger fix am Transportwagen (7), angebracht ist, dadurch gekennzeichnet, daß die Führungsvorrichtung (16) sich über zumindest die wesentliche Länge des Hub-bzw. Absenkweges der Hubeinrichtung (4, 4′) und der Warenträger (3, 3′) erstreckt und daß zum Absenken und Anheben der Hubeinrichtung (4, 4') Bänder, Seile oder dergleichen (5) dienen, und daß zumindest eines dieser Bänder, Seile oder dergleichen in Wirkverbindung mit einem Bandspannungs-Überwachungsschalter (19, 20) steht, der bei einem Nachlassen oder Aufhören der Spannung des Bandes, Seiles oder dergleichen die Absenkbewegung der Hubeinrichtung (4, 4') unterbricht.

2. Anordnung nach Anspruch 1, wobei die Warenträger an ihren oben gelegenen Bereichen seitlich je einen Tragarm aufweisen, dadurch gekennzeichnet, daß für jeden Tragarm (12) mit den Tragarm aufweisendem Führungsteil (18) zwei senkrechte Führungsleisten (16) vorgesehen und fix am Transportwagen (7, 14) befestigt sind, wobei zwischen den Führungsleisten (16) eines Paares ein Führungsspalt (17) mit einem Abstand (a) zwischen den beiden Leisten besteht, wobei dieser Abstand der Dicke der Führungsteile (18) und Tragarme (12) des Warenträgers entspricht.

3. Anordnung nach Anspruch 2, dadurch gekennzeichnet, daß die Führungsleisten (16) aus einem gegen chemisch aggressive Dämpfe widerstandsfähigen Kunststoff bestehen.

4. Anordnung nach Anspruch 2 oder 3, dadurch gekennzeichnet, daß der die Hubteile (11) tragende Hubbalken (10) der Hubeinrichtung (4, 4′) von außen her durch den Führungsspalt (17) zwischen den Führungsleisten (16) hindurchgeführt sein kann und daß die Hubteile (11) von innen nach außen gerichtet unter die Tragarme (12) des Warenträgers (3, 3′) bringbar sind.

5. Anordnung nach einem der Ansprüche 1 bis 4, dadurch gekennzeichnet, daß die Führungsleisten (16) mit ihrem unteren Ende kurz oberhalb der Führungsteile (18) und Tragarme (12) des Warenträgers (3) in seiner völlig abgesenkten Position enden.

## Claims

1. Arrangement for lowering or lifting work carriers for the purpose of loading the baths of chemical plant, in particular electroplating plant, a transporter movable along the plant and a hoisting device being provided which hoisting device can be moved up and down in a vertical direction by the transporter and can be inserted with its lifting parts under the support arms of the particular work carrier by moving the transporter, and a guiding device being provided for the work carrier in case its support arms get off the lifting parts, the work carier guiding device (16) being fixed to the transporter (7), characterized in that the guiding device (16) extends at least as long as the essential length of the lifting and lowering path of the hoisting device (4, 4') and the work carriers (3, 3'), and that belts, cables or similar devices (5) serve for lowering and lifting the hoisting device (4, 4'), and that at least one of these belts, cables or similar devices combines with a belt tension monitoring switch (19, 20) which on slackening or cessation of the tension of the belt, cable or similar device interrupts the lowering movement of the hoisting device (4, 4').

2. Arrangement in accordance with Claim 1, where the work carriers in each case have a support arm on the side of their top parts, characterized in that for each support arm (12) with the guide part (18) bearing the support arm, two vertical guide strips (16) are provided and are securely fixed to the transporter (7, 14) each pair of guide strips (16) representing a slide way (17) with a gap (a) between the two strips, this gap corresponding to the width of the guide parts (18) and support arms (12) of the work carrier.

3. Arrangement in accordance with Claim 2, characterized in that the guide strips (16) consist of plastic material resistant to chemically aggressive vapours.

4. Arrangement in accordance with Claim 2 or 3, characterized in that the lifting bar (10) of the hoisting device (4, 4') bearing the lifting parts (11) may be inserted from the exterior into the slide way (17) formed by the guide strips (16) and that the lifting parts (11) can be positioned from the interior towards the exterior under the support arms (12) of the work carrier (3, 3').

5. Arrangement in accordance with one of the Claims 1 to 4, characterized in that the bottom ends of the guide strips (16) terminate just above the guide parts (18) and the support arms (12) of the work carrier (3) in its completely lowered position.

## Revendications

1. Dispositif destiné à abaisser ou à relever des porte-charges en vue d'alimenter des bains d'installations chimiques, et en particulier d'installations de galvanoplastie, un chariot transporteur déplaçable le long de l'installation et un dispositif de levage se déplaçant vers le haut et vers le bas perpendiculairement au chariot transporteur étant prévus, dispositif de levage qui, par l'intermédiare de ces éléments de levage, peut être amené sous des consoles du porte-charges correspondant par déplacement du chariot transporteur, un mécanisme de guidage du porte-charges étant prévu pour le cas où ses consoles se soulèveraient des éléments de levage, le mécanisme de guidage (16) du porte-charges étant fixé solidairement sur le chariot transporteur (7), ledit dispositif étant caractérisé en que le mécanisme de guidage (16) s'étend au moins sur pratiquement toute la longueur de la course de levage et d'abaissement du dispositif de levage (4, 4') et des porte-charges (3, 3'), et en que des courroies, câbles ou matériels similaires (5) servent à abaisser et lever le dispositif de levage (4, 4'), et que l'une de ces courroies, l'un de ces câbles ou matériels similaires au moins soit activement relié à un interrupteur témoin de tension de courroie (19, 20) qui, en cas de relâchement partiel ou total de la tension de la courroie, du câble ou du matériel similaire, interrompt le mouvement d'abaissement du dispositif de levage (4, 4').

2. Dispositif selon revendication 1, les porte-charges présentant latéralement, dans leurs parties supérieures, respectivement une console, caractérisé en ce que pour chaque console (12), avec l'élément de guidage (18) comportant la console, deux réglettes de guidage verticales (16) fixées solidairement sur le chariot transporteur (7, 14) sont prévues, une fente de guidage (17), qui présente un espacement (a) entre les deux réglettes, se trouvant entre chaque couple de réglettes de guidage (16), cet espacement correspondant à l'épaisseur des éléments de guidage (18) et des consoles (12) du porte-charges.

3. Dispositif selon revendication 2, caractérisé en ce que les réglettes de guidage (16) sont constituées d'une matière synthétique résistante aux vapeurs corrosives.

4. Dispositif selon revendication 2 ou 3, caractérisé en ce que le longeron mobile (10) portant les éléments de levage (11) du dispositif de levage (4, 4') peut être introduit de l'extérieur par la fente de guidage (17) formée entre les réglettes de guidage (16), et en ce que les éléments de levage (11) peuvent être amenés de l'intérieur vers l'extérieur sous les consoles (12) du porte-charges (3, 3').

5. Dispositif selon l'une des revendications 1 à 4, caractérisé en ce que l'extrémité inférieure des réglettes de guidage (16) aboutit légèrement au-dessus des éléments de guidage (18) et consoles (12) du porte-charge (3) lorsqu'il est entièrement abaissé.
